(19) **Europäisches Patentamt**

**European Patent Office**

**Office européen des brevets**

(11) **EP 0 793 421 B1**

(12) **EUROPEAN PATENT SPECIFICATION**

(45) Date of publication and mention
of the grant of the patent:
**02.05.2003   Bulletin 2003/18**

(51) Int Cl.⁷: **A23G 3/30**

(86) International application number:
**PCT/US95/15519**

(21) Application number: **95942946.5**

(22) Date of filing: **01.12.1995**

(87) International publication number:
**WO 96/018309 (20.06.1996 Gazette 1996/28)**

(54) **IMPROVED CHEWING GUM CONTAINING SALATRIM**

VERBESSERTER KAUGUMMI MIT SALATRIM

GOMME A MACHER AMELIOREE CONTENANT DU SALATRIM

(84) Designated Contracting States:
**DE DK FR GB IT**

(30) Priority:  **13.12.1994  WOPCT/US94/14611**

(43) Date of publication of application:
**10.09.1997   Bulletin 1997/37**

(73) Proprietor: **WM. WRIGLEY JR. COMPANY**
**Chicago Illinois 60611-4287 (US)**

(72) Inventors:
 • **YATKA, Robert, J.**
   **Orland Park, IL 60462 (US)**
 • **BUNCZEK, Michael**
   **Dolton, IL 60419 (US)**
 • **URNEZIS, Philip**
   **Lombard, IL 60148 (US)**
 • **MAZZONE, Philip**
   **Griffith, IN 46319 (US)**

 • **MAZUREK, Pamela**
   **Orland Park, IL 60462 (US)**
 • **McGREW, Gordon, N.**
   **Evanston, IL 60201 (US)**
 • **SONG, Joo, H.**
   **Northbrook, IL 60062 (US)**
 • **WOLF, Fred, R.**
   **Naperville, IL 60565 (US)**

(74) Representative:
**Baverstock, Michael George Douglas et al**
**BOULT WADE TENNANT,**
**Verulam Gardens**
**70 Gray's Inn Road**
**London WC1X 8BT (GB)**

(56) References cited:
**US-A- 3 984 574          US-A- 5 192 562**
**US-A- 5 258 197          US-A- 5 362 508**

## EP 0 793 421 B1

**Description**

BACKGROUND OF THE INVENTION

The present invention relates generally to chewing gum. More specifically, the present invention relates to improved formulations for chewing gum and bases.

Chewing gum generally consists of a water insoluble gum base and a water soluble portion along with flavors. The water soluble portion and flavors dissipate during chewing and the gum base is retained in the mouth throughout the chew.

The insoluble gum base generally comprises elastomers, resins, fats and oils, softeners, and inorganic fillers. Elastomers can include synthetic elastomers including polyisobutylene, isobutylene-isoprene copolymers, styrene-butadiene copolymers, polyvinyl acetate, polyisoprene, polyethylene, vinyl acetate - vinyl laurate copolymers, and combinations thereof. Natural elastomers that can be used include natural rubber.

The gum base can include elastomer plasticizers. Such elastomer plasticizers can include natural rosin esters, as well as other elastomer plasticizers. Additionally, the gum base can include fillers/texturizers and softeners/emulsifiers. Softeners are added to chewing gum in order to optimize the chewability and mouth feel of the gum. Softeners/emulsifiers that are typically used include tallow, hydrogenated tallow, hydrogenated and partially hydrogenated vegetable oils, cocoa butter, glycerol monostearate, glycerol triacetate, lecithin, and combinations thereof.

In addition to a water insoluble gum base portion, a typical chewing gum composition includes a water soluble portion and one or more flavoring agents. The water soluble portion can include bulk sweeteners, high intensity sweeteners, flavoring agents, softeners, emulsifiers, colors, acidulants, fillers, antioxidants, and other components that provide desirable attributes.

SUMMARY OF THE INVENTION

The present invention provides improved chewing gum formulations and bases, as well as methods of producing chewing gum and bases.

The present invention provides a wax-free gum base comprising:

an elastomer; and
at least 0.2% by weight structured triacylglycerols that include short and long chain acyl triglyceride molecules.

The present invention also provides a chewing gum comprising:

an insoluble wax-free gum base;
a water soluble portion;
a flavour; and
at least 0.01% by weight structured triacylglycerols that include short and long chain acyl triglyceride molecules.

The present invention additionally provides a method for creating a wax-free chewing gum comprising the step of substituting for a plasticizer, softener, or emulsifier in a chewing gum formulation structured triacylglycerols that include short and long chian acyl triglyceride molecules.

The present invention further provides a method for reducing caloric content in a wax-free chewing gum formulation including fats/oils comprising the step of using structured triacylglycerols that include short and long chain acyl triglyceride molecules in the formulation.

Pursuant to the present invention, chewing gum is provided that includes salatrim (sort and long chain acyltriglyceride molecules). Salatrim can be used in base and/or gum formulations as a plasticizer, softener, and/or emulsifier. In an embodiment, salatrim is added to sucrose-type gum formulations replacing a small or large quantity of other fats, oils, and emulsifiers.

The salatrim can also act as a base compatibilizer to help blend elastomers and polyvinyl acetate. Salatrim thereby reduces phase separation of gum base during chewing.

A variety of base and chewing gum formulations including salatrim can be created and/or utilized pursuant to the present invention. The wax-free base formulations of the present invention may be conventional bases that are tacky or non-tacky and/or bubble gum-type bases. The gum formulations can be low or high moisture formulations containing low or high amounts of moisture-containing syrup. Salatrim can also be used in low sugar and non-sugar containing gum formulations made with sorbitol, mannitol, other polyols, and non-sugar carbohydrates. Non-sugar formulations can include low or high moisture sugar-free chewing gums.

In an embodiment, salatrim is used as a softener and is combined with other base softeners for use in chewing gum base. Such other softeners include, but are not limited to, fats and oils, such as tallow, hydrogenated and partially hydrogenated vegetable oils, cocoa butter, mono- and di-glycerides, acetylated monoglycerides, softeners such as glycerol triacetate, waxes such as paraffin and microcrystalline waxes, and emulsifiers such as lecithin.

In an embodiment, salatrim is used as a softener in chewing gum formulations to replace typical chewing gum softeners. In an embodiment, salatrim is used in the chewing gum formulations to replace typical plasticizers and emulsifying agents that are used in chewing gum formulations. For example, salatrim can be used to replace glycerin, lecithin, glycerol triacetate, acetylated monoglycerides, and mono- and di-glycerides.

In an embodiment, the salatrim softener is used in a chewing gum formulation combined with other softeners, emulsifiers, and/or plasticizing agents. If desired, salatrim can be used alone or combined with an inert material which may be added in a dry form. The salatrim softener can also be added to the flavor as a carrier for its use in chewing gum.

The salatrim softener, when used according to the present invention, affords the chewing gum an improved texture, improved shelf life, and improved flavor quality. Even though salatrim is similar to other fats and oils in some respects, salatrim has a lower caloric value and creates a resultant chewing gum product that has a high consumer-acceptability.

Additionally, the salatrim can act as a base compatibilizer to help blend elastomers and polyvinyl acetate to reduce phase separation of gum base during chewing.

It is an advantage of the present invention to provide an improved chewing gum formulation.

A further advantage of the present invention is to provide an improved base that can be used to create chewing gum.

Furthermore, an advantage of the present invention is to provide an improved method of blending elastomers and polyvinyl acetate and preventing phase separation.

Another advantage of the present invention is that it provides an improved chewing gum softener.

Still further, an advantage of the present invention is that it provides an improved chewing gum plasticizer.

Additionally, an advantage of the present invention is that it provides an improved emulsifying agent for chewing gum.

Moreover, an advantage of the present invention is that it provides an improved method for creating chewing gum.

Furthermore, an advantage of the present invention is that it provides a chewing gum having improved texture.

An advantage of the present invention is that it provides a chewing gum having an improved shelf life.

Still further, an advantage of the present invention is that it provides a chewing gum having improved flavor quality.

Additional features and advantages of the present invention are described in, and will be apparent from, the detailed description of the presently preferred embodiments.

DETAILED DESCRIPTION

OF THE PRESENTLY PREFERRED EMBODIMENTS

The present invention provides improved chewing gum formulations and base formulations. Pursuant to the present invention, short and long chain acyltriglyceride molecules (herein referred to as "salatrim") are used. Salatrim can be used in chewing gum formulations and/or bases. Specifically, salatrim can be used as a softener, plasticizer, base compatibilizer and/or emulsifying agent.

Salatrim is the generic name for a family of low calorie fats. Examples of such fats are described in U.S. Patent No. 5,258,197, assigned to Nabisco, Inc. Other documents which discuss the use of salatrim are: **U.S. Patent No. 5,362,508; WO 94/12052; WO 94/13150; WO 94/16573; WO 94/19961;** *Inform,* **Vol. 5, No. 8 (August 1994) p. 935;** *Candy Industry,* **(August 1994) p. 9;** *The Manufacturing Confectioner* **(August 1994) p. 7;** *Food Engineering* **(August 1994), p. 24; and** *Food Processing,* **(September 1994) p. 64.**

Under a licensed agreement, salatrim is being manufactured and marketed by Pfizer, Inc. of Groton, Connecticut. Nabisco has submitted a GRAS petition to the U.S. FDA which has accepted the filing of Nabisco's petition.

Salatrim is a family of low calorie fats, which have only 5 calories per gram compared to regular fats that provided 9 calories per gram. Salatrim is a mixture of long chain fatty acids (mostly stearic) and short chain fatty acids (acetic, propionic, and/or butyric) on a glycerol backbone. The fats are prepared by interesterifying vegetable oil with the triacylglycerol.

An advantage of salatrim is that it has physical properties similar to regular fats, but is low in calories.

Some of the fats in the salatrim family include:

| Salatrim Family | Short Chain Source | Long Chain Source | Mole Ratio |
|---|---|---|---|
| 4CA | Tributyrin | Hydrogenated Canola Oil | 2.5:1 |
| 23CA | Triacetin Tripropionin | Hydrogenated Canola oil | 11:1:1 |
| 234CS | Triacetin Tripropionin Tributyrin | Hydrogenated Cotton seed Oil | 4:4:4:1 |
| 234CA | Triacetin Tripropionin Tributyrin | Hydrogenated Canola Oil | 4:4:4:1 |
| 2350 | Triacetin Tripropionin | Hydrogenated Soybean Oil | 11:1:1 |

The inventors believe that salatrim can be used in base formulations, and/or chewing gum formulations.

In this regard, salatrim can be used as a softener, plasticizer, and/or emulsifying agent. Preferably, salatrim will constitute 0.02% to 40% by weight of the gum base, and 0.01% to 10% by weight of the chewing gum formulation.

Salatrim being a saturated fatty acid triglyceride can be used to replace fats in gum base that are saturated fatty acid triglycerides. Most triglycerides used as fat in gum bases are derived from fatty acids such as stearic acid (C18), palmitic (C16), myristic acid (C14), oleic acid (C18:1 unsaturated) and linoleic acid (C18:2 unsaturated). These common fatty acids are available from saturated soybean oil, olive oil, canola oil, cottonseed oil, coconut oil, palm oil, corn oil, palm kernel oil, safflower oil, lard, tallow, and a wide variety of short and long chain fatty acids.

Generally, these fats or lipids are hydrogenated to make them saturated for use in gum base. Saturation of the lipids significantly improves their oxidation stability, which is very important for shelf life of gum base and gum. When oil is hydrogenated it becomes a solid at room temperature, thus a fat.

The above mentioned fats contain a natural fatty acid distribution dependent on its source. When the triglyceride is interesterified the triglyceride is broken down to glycerol and free fatty acids, and is then recombined to give different triglycerides molecules. If the fatty acids are separated to specific fatty acids and recombined with glycerol, this is called a structure lipid. Salatrim is one such lipid.

As noted above, salatrim is made with hydrogenated fatty acids from vegetable oils, preferably stearic acid and palmitic acid as the long chain fatty acid, and acetic acid, propionic acid, and butyric acid as the short chain fatty acids. Some structured lipids like salatrim may have properties that are different than conventional saturated triglycerides.

Stearic (C18) and palmitic (C16) fatty acid triglycerides being lipophilic are good softeners that lubricate gum base elastomers similar to the isobutylene-isoprene copolymer. On the other hand, short chain fatty acid triglycerides being less lipophilic do not act as good softeners for elastomers.

However, most gum base formulas also contain a significant amount of food grade polyvinyl acetate (PVAc). Polyvinyl acetate can be readily softened or plasticized by compounds such as triacetin, tripropionin, and tributyrin.

Elastomers and polyvinyl acetate are generally not compatible and are softened or melted, and physically mixed to make a gum base. Along with these materials elastomer plasticizers, such as resins, fats and emulsifiers, are used to plasticize and soften the elastomers. The emulsifiers include lecithin or glycerol monostearate. In the base matrix, the typical non-compatible nature of the elastomers and polyvinyl acetate may result in a gum base matrix that may be unstable and cause problems during the course of mastication. One such problem is polyvinyl acetate globules in a non-tack gum base become larger and reassociate causing stickiness to dentures during mastication.

Salatrim may act as a "compatibilizers" when combining elastomers and polyvinyl acetate so that the gum base matrix may become more homogenized to give a more stable matrix. Lower melting point salatrims may be most effective as a compatibilizer. The acetic, propionic, and butyric acid portions could plasticize polyvinyl acetate, and the longer chain fatty acids may soften the elastomer. Acetylated monoglycerides may have a similar function as a compatibilizer, but salatrim with longer short chain acids such as butyric and propionic or two long chain stearic fatty acids with one acetic acid may be more effective as a compatibilizer for this type of base matrix. In addition other fats/oils may be used with salatrim to soften the elastomer to obtain a quality gum base formula.

Gum base typically consists of a polyvinyl acetate phase, a rubber/fat/resin phase (rubber phase), and filler. Usually, the polyvinyl acetate and rubber phases are immiscible or almost immiscible as can be predicted by the solubility parameter.

Solubility is believed to occur between materials, for example when the Gibbs free energy of mixing is less than zero. The energy of mixing is discussed by Dr. Billmeyer in the "Textbook Of Polymer Science", Second Edition, John Wiley and Sons, Inc. (1975), pages24-26. The free energy of mixing ΔG is defined according to the following equation:

$$\Delta G = \Delta H - T\Delta S$$

wherein ΔH represents the enthalpy of mixing, ΔS represents the entropy of mixing, and T is the absolute temperature.

For reasonably nonpolar molecules, and where the degree of hydrogen bonding is insignificant or nonexistent, the enthalpy of mixing is positive and can be derived from the following equation:

$$\Delta H = V_1 V_2 (\delta_1 - \delta_2)^2$$

wherein V is the volume fraction and subscripts 1 and 2 refer to the solvent and the polymer, respectively. The quantity $\delta^2$ is the cohesive energy density of an ingredient. The quantity $\delta$, which represents the square root of the cohesive energy density, is known as the Solubility Parameter.

Generally, in the absence of significant hydrogen bonding, solubility can be expected to occur between a solvent and a polymer if the difference in Solubility Parameters $(\delta_1 - \delta_2)$ is less than about 1.7-2.0. In other words, materials having similar Solubility Parameters tend to reach thermodynamic equilibrium when they are mixed together, and this tendency toward equilibrium causes the different molecules to attract and mix with each other. Materials having dissimilar Solubility Parameters tend to reach thermodynamic equilibrium when separated, and this causes the different molecules to repel and separate from each other.

The Solubility Parameters of different substances have been the subject of various calculations and publications. For a polymer, a relatively easy way to determine $\delta_2$ is from a summation of molar attraction constants multiplied by the density and divided by the repeating unit molecular weight:

$$\delta_2 = \frac{\rho \Sigma E_i}{M.W.}$$

wherein $\Sigma$ is the summation operator, $E_i$ is the molar attraction constant for each chemical moiety making up the repeating unit, M.W. is the molecular weight of the repeating unit, and $\rho$ is the polymer density.

The Solubility Parameter $(\delta_1 - \delta_2)$ can be expressed in Solubility Parameter Units (S.P.U.'s), with one S.P.U. being equal to one $[J/m^3]^{\frac{1}{2}} \times 10^{-3}$, where J=Joules and m=meters. For a more detailed explanation of the Solubility Parameter and its values for various compounds, see the Third Edition of "Polymer Handbook", edited by Bandrup and Immergut, and published by John Wiley and Sons, Inc., New York, N.Y., in 1989.

The solubility parameter of polyvinyl acetate is about 19.1 to 19.6. Typically, the solubility parameter of rubber is about 16-17. As the solubility parameter of any two materials becomes more than 2 S.P.V.'s different from one another, these materials are less miscible.

To overcome the potential problem between polyvinyl acetate and rubber, a compatibilizer may be used such as salatrim. The compatibilizer should have two groups in the molecule - one which is a rubber liking group such as long chain fatty acid, having a solubility parameter of about 16-17. The other group should have a polyvinyl acetate liking group such as acetic, propionic, or butyric acid having a solubility parameter of about 19.5.

Pursuant to the present invention, salatrim can be used as a compatibilizer in gum base. There are a variety of benefits that can be achieved by using a compatibilizer in gum base.

First, a compatibilizer can effectively inhibit separation and promote dispersion of the components. Since gum base is a mixture of lipophilic and nonlipophilic substances, even if the mixture is molten when blended, it can separate during storage. This can make the mixture non-uniform. The addition of a compatibilizer can remedy this drawback.

Second, compatibilizers can prevent gum from sticking to teeth. To prevent gum base from sticking to teeth, it is important to use a large amount of non-polar gum base ingredients and by judiously choosing and utilizing compatibilizers one can reduce the sticking of the gum base to teeth.

Third, it has been found that compatibilizers provide a softening action of the gum base. These materials will reduce the elasticity of high molecular weight substances such as gums, and adjust the sensation of hardness.

Salatrim may be used as a partial or full replacement of saturated fats of emulsifiers in gum bases made with an elastomer and polyvinyl acetate. Gum bases may contain natural and synthetic elastomers and may be wax free or contain wax, may be bubble gum type bases or have reduced tack properties. It is preferred that salatrim be mixed in the gum base, but may also added early to mix with the base during chewing gum manufacturing. Gums made with salatrim will have improved texture, may have improved flavor lasting properties, and will not cause problems during mastication.

It is also believed that salatrim will provide a cooling sensation during chewing. Thus salatrim may afford an increased cooling sensation to mint or fruit flavored chewing gum products.

Accordingly, salatrim can be used in a variety of different chewing gum and base formulations. Salatrim can exist as either a liquid or solid at room temperature. Where salatrim is a liquid at room temperature, salatrim may be added in its liquid form. Where salatrim is a solid at room temperature, salatrim should be melted before being added to a gum base or gum formulation.

Chewing gum generally consists of a water insoluble gum base, a water soluble portion, and flavors.

The insoluble gum base generally comprises elastomers, resins, fats and oils, softeners, and inorganic fillers. The gum base may or may not include wax. The insoluble gum base can constitute 5 to 95 percent, by weight, of the chewing gum, more commonly, the gum base constitutes 10 to 50 percent of the gum, and in some preferred embodiments, 20 to 35 percent, by weight, of the chewing gum.

In an embodiment, the chewing gum base of the present invention contains 20 to 60 weight percent synthetic elastomer, 0 to 30 weight percent natural elastomer, 5 to 55 weight percent elastomer plasticizer, 4 to 35 weight percent filler, 5 to 35 weight percent softener, and optional minor amounts (one percent or less) of miscellaneous ingredients such as colorants, and antioxidants. Preferably, the salatrim does not constitute more than 40% by weight of the gum base.

Synthetic elastomers may include, but are not limited to, polyisobutylene with a GPC weight average molecular weight of 10,000 to 95,000, isobutylene-isoprene copolymer (butyl elastomer), styrene-butadiene copolymers having styrene-butadiene ratios of 1:3 to 3:1, polyvinyl acetate having a GPC weight average molecular weight of 2,000 to 90,000, polyisoprene, polyethylene, vinyl acetate-vinyl laurate copolymer having vinyl laurate content of 5 to 50 percent by weight of the copolymer, and combinations thereof.

Preferred ranges are, for polyisobutylene, 50,000 to 80,000 GPC weight average molecular weight, for styrene-butadiene, 1:1 to 1:3 bound styrene-butadiene, for polyvinyl acetate, 10,000 to 65,000 GPC weight average molecular weight with the higher molecular weight polyvinyl acetates typically used in bubble gum base, and for vinyl acetate-vinyl laurate, vinyl laurate content of 10-45 percent.

Natural elastomers may include natural rubber such as smoked or liquid latex and guayule as well as natural gums such as jelutong, lechi caspi, perillo, sorva, massaranduba balata, massaranduba chocolate, nispero, rosindinha, chicle, gutta hang kang, and combinations thereof. The preferred synthetic elastomer and natural elastomer concentrations vary depending on whether the chewing gum in which the base is used is adhesive or conventional, bubble gum or regular gum, as discussed below. Preferred natural elastomers include jelutong, chicle, sorva and massaranduba balata.

Elastomer plasticizers may include, but are not limited to, natural rosin esters, often called estergums, such as glycerol esters of partially hydrogenated rosin, glycerol esters polymerized rosin, glycerol esters of partially dimerized rosin, glycerol esters of rosin, pentaerythritol esters of partially hydrogenated rosin, methyl and partially hydrogenated methyl esters of rosin, pentaerythritol esters of rosin; synthetics such as terpene resins derived from alpha-pinene, beta-pinene, and/or d-limonene; and any suitable combinations of the foregoing. The preferred elastomer plasticizers will also vary depending on the specific application, and on the type of elastomer which is used.

Fillers/texturizers may include magnesium and calcium carbonate, ground limestone, silicate types such as magnesium and aluminum silicate, clay, alumina, talc, titanium oxide, mono-, di- and tri-calcium phosphate, cellulose polymers, such as wood, and combinations thereof.

In an embodiment, in addition to salatrim, pursuant to the present invention, softeners/emulsifiers may include tallow, hydrogenated tallow, hydrogenated and partially hydrogenated vegetable oils, cocoa butter, glycerol monostearate, glycerol triacetate, lecithin, mono-, di- and triglycerides, acetylated monoglycerides, fatty acids (e.g. stearic, palmitic, oleic and linoleic acids), and combinations thereof.

Colorants and whiteners may include FD&C-type dyes and lakes, fruit and vegetable extracts, titanium dioxide, and combinations thereof.

The base does not include wax. An example of a wax-free gum base is disclosed in U.S. Patent No. 5,286,500, the disclosure of which is incorporated herein by reference.

In addition to a water insoluble gum base portion, a typical chewing gum composition includes a water soluble bulk portion and one or more flavoring agents. The water soluble portion can include bulk sweeteners, high intensity sweeteners, flavoring agents, softeners, emulsifiers, colors, acidulants, fillers, antioxidants, and other components that provide desired attributes.

The softeners, which are also known as plasticizers and plasticizing agents, generally constitute 0.5 to 15% by weight of the chewing gum. The softeners may, in addition to including salatrim, include glycerin, lecithin, and combinations thereof. Aqueous sweetener solutions such as those containing sorbitol, hydrogenated starch hydrolysates, corn syrup and combinations thereof, may also be used as softeners and binding agents in chewing gum.

Bulk sweeteners include both sugar and sugarless components. Bulk sweeteners typically constitute 5 to 95% by weight of the chewing gum, more typically, 20 to 80% by weight, and more commonly, 30 to 60% by weight of the gum.

Sugar sweeteners generally include saccharide-containing components commonly known in the chewing gum art, including, but not limited to, sucrose, dextrose, maltose, dextrin, dried invert sugar, fructose, levulose, galactose, corn syrup solids, and the like, alone or in combination.

Sorbitol can be used as a sugarless sweetener. Additionally, sugarless sweeteners can include, but are not limited to, other sugar alcohols such as mannitol, xylitol, hydrogenated starch hydrolysates, maltitol, lactitol, and the like, alone or in combination.

High intensity artificial sweeteners can also be used in combination with the above. Preferred sweeteners include, but are not limited to sucralose, aspartame, salts of acesulfame, alitame, saccharin and its salts, cyclamic acid and its salts, glycyrrhizin, dihydrochalcones, thaumatin, monellin, and the like, alone or in combination. In order to provide longer lasting sweetness and flavor perception, it may be desirable to encapsulate or otherwise control the release of at least a portion of the artificial sweetener. Such techniques as wet granulation, wax granulation, spray drying, spray chilling, fluid bed coating, coacervation, and fiber extrusion may be used to achieve the desired release characteristics.

Usage level of the artificial sweetener will vary greatly and will depend on such factors as potency of the sweetener, rate of release, desired sweetness of the product, level and type of flavor used and cost considerations. Thus, the active level of artificial sweetener may vary from 0.02 to 8%. When carriers used for encapsulation are included, the usage level of the encapsulated sweetener will be proportionately higher.

Combinations of sugar and/or sugarless sweeteners may be used in chewing gum. Additionally, the softener may also provide additional sweetness such as with aqueous sugar or alditol solutions.

If a low calorie gum is desired, a low caloric bulking agent can be used. Example of low caloric bulking agents include: polydextrose; Raftilose, Raftilin; Fructooligosaccharides (NutraFlora); Palatinose oligosaccharide; Guar Gum Hydrolysate (Sun Fiber); or indigestible dextrin (Fibersol). However, other low calorie bulking agents can be used.

A variety of flavoring agents can be used. The flavor can be used in amounts of 0.1 to 15 weight percent of the gum, and preferably, 0.2 to 5%. Flavoring agents may include essential oils, synthetic flavors or mixtures thereof including, but not limited to, oils derived from plants and fruits such as citrus oils, fruit essences, peppermint oil, spearmint oil, other mint oils, clove oil, oil of wintergreen, anise and the like. Artificial flavoring agents and components may also be used. Natural and artificial flavoring agents may be combined in any sensorially acceptable fashion.

The present invention, it is believed, can be used with a variety of processes for manufacturing chewing gum.

Chewing gum is generally manufactured by sequentially adding the various chewing gum ingredients to commercially available mixers known in the art. After the ingredients have been thoroughly mixed, the chewing gum mass is discharged from the mixer and shaped into the desired form, such as by rolling into sheets and cutting into sticks, extruding into chunks, or casting into pellets.

Generally, the ingredients are mixed by first melting the gum base and adding it to the running mixer. The gum base may alternatively be melted in the mixer. Color and emulsifiers can be added at this time.

A chewing gum softener such as glycerin can be added next along with part of the bulk portion. Further parts of the bulk portion may then be added to the mixer. Flavoring agents are typically added with the final part of the bulk portion. The entire mixing process typically takes from five to fifteen minutes, although longer mixing times are sometimes required.

Liquid salatrim or melted salatrim (solid salatrim in its liquid form) may be added to chewing gum during manufacture of the base. Liquid salatrim or melted salatrim may be added at any time during processing of the base, but preferably, near the end of the batch to act as a softener.

Salatrim may be added to conventional bases that contain wax or are wax-free bases, that may or may not contain polyvinyl acetate or terpene resins, or bases that contain natural gums or synthetic bases, bases that are non-tacky, or are bubble gum bases.

At levels of 0.02% to 40% by weight of the gum base, salatrim may replace some or most of the partially hydrogenated or hydrogenated vegetable oils, mono- and di-glycerides, acetylated monoglycerides, or other softeners used in the gum base. Salatrim may also be blended with the other softeners in the gum base and added during the base manufacturing process. A chewing gum base made with salatrim will have greater oxidative stability due to the presence of salatrim, and may give chewing gum a cleaner taste.

Liquid salatrim or melted salatrim may also be added to a chewing gum formulation in its liquid form or may be mixed with other gum or base softeners and added to a gum formulation during processing. Liquid salatrim or melted salatrim may be added during the gum manufacturing at any time during processing, but preferably, early in the batch to allow thorough mixing with the gum base.

Salatrim can be added to the chewing gum formulation so that it constitutes 0.01% to 10% by weight of the chewing gum formulation. In a preferred embodiment, salatrim constitutes 0.02% to 2% and most preferably, 0.05% to 0.5% by weight of the chewing gum formulation. Salatrim may be blended with other softeners such as lecithin, glycerol triacetate, acetylated monoglycerides, mono- and di-glycerides, or other vegetable oils and fats that may be added to a gum formulation. When a solid softener is used, such as lecithin, liquid salatrim or melted salatrim may act as a carrier or solvent for the particulate lecithin. Lecithin when mixed with liquid salatrim or melted salatrim may allow for an easier dispersion of lecithin in a gum formulation. This should be contrasted with soy bean oil that is typically used as a carrier for lecithin.

Liquid salatrim or melted salatrim may also be blended with a wide range of natural and artificial flavor oils and act as a carrier for flavor oils. Liquid salatrim or molten salatrim can be an excellent carrier for flavors such as spearmint, peppermint, cinnamon, wintergreen, and fruit flavors. The level of salatrim mixed with flavors can vary over a wide range from 1% to 99% by weight since most gum flavors are oil soluble.

Salatrim can also act as a carrier for artificial and natural colors such as in FD&C lake dispersions and natural colors like betacarotene. Salatrim can reduce the off-taste associated with some fat/oil carriers and allows higher usage of color.

Salatrim may also be used as a release agent for encapsulated flavors. Salatrim can be added to an encapsulating media to allow for faster and easier dissolution of the encapsulating media.

By way of example, and not limitation, examples of the present invention will now be given:

EXAMPLES

The following contemplative examples of the invention and comparative examples are provided by way of explanation and illustration.

The formulas listed in Table I comprise various contemplative sugar formulas in which salatrim can be added at various levels to gum.

TABLE 1

| (WEIGHT PERCENT) | | | | | | |
|---|---|---|---|---|---|---|
| | Ex. 1 | Ex. 2 | Ex. 3 | Ex. 4 | Ex. 5 | Ex. 6 |
| Sugar | 61.55 | 61.5 | 61.35 | 62.5 | 62.0 | 61.0 |
| Base | 19.2 | 19.2 | 19.2 | 19.2 | 19.2 | 19.2 |
| Corn Syrup Peppermint | 16.9 | 16.9 | 16.9 | 16.9 | 16.9 | 16.9 |
| Flavor | 0.9 | 0.9 | 0.9 | 0.9 | 0.9 | 0.9 |
| Glycerin | 1.4 | 1.4 | 1.4 | 0.0 | 0.0 | 0.0 |
| Salatrim | 0.05 | 0.10 | 0.25 | 0.50 | 1.0 | 2.0 |

In Table 2, dextrose monohydrate is added to a sugar formula with various levels of salatrim.

TABLE 2

| | Ex. 7 | Ex. 8 | Ex. 9 | Ex. 10 | Ex. 11 | Ex. 12 |
|---|---|---|---|---|---|---|
| Sugar | 55.65 | 55.6 | 55.45 | 56.2 | 55.7 | 54.7 |
| Base | 19.2 | 19.2 | 19.2 | 19.2 | 19.2 | 19.2 |
| Corn Syrup | 12.9 | 12.9 | 12.9 | 12.9 | 12.9 | 12.9 |
| Glycerin Dextrose | 1.4 | 1.4 | 1.4 | 0.4 | 0.4 | 0.4 |
| Monohydrate Peppermint | 9.9 | 9.9 | 9.9 | 9.9 | 9.9 | 9.9 |
| Flavor | 0.9 | 0.9 | 0.09 | 0.9 | 0.9 | 0.9 |
| Salatrim | 0.05 | 0.10 | 0.25 | 0.50 | 1.0 | 2.0 |

The following Tables 3 through 10 give examples of gum formulations demonstrating formula variations in which liquid or molten salatrim, in the form of liquid oil, can be used.

Examples 13-17 in Table 3 demonstrate the use of salatrim in low-moisture sugar formulations having less than 2% theoretical moisture:

TABLE 3

|  | Ex. 13 | Ex. 14 | Ex. 15 | Ex. 16 | Ex. 17 |
|---|---|---|---|---|---|
| Sugar | 58.75 | 58.6 | 58.3 | 52.7 | 51.9 |
| Gum Base | 19.2 | 19.2 | 19.2 | 19.2 | 19.2 |
| Corn Syrup[a] | 6.0 | 6.0 | 6.0 | 6.0 | 6.0 |
| Dextrose Monohydrate | 10.0 | 10.0 | 10.0 | 10.0 | 10.0 |
| Lactose | 0.0 | 0.0 | 0.0 | 5.0 | 5.0 |
| Glycerin[b] | 5.0 | 5.0 | 5.0 | 5.0 | 5.0 |
| Flavor | 0.9 | 0.9 | 0.9[d] | 0.9[d] | 0.9[d] |
| Lecithin[c] | 0.1 | 0.1 | 0.1 | 0.2 | — |
| Salatrim[c] | 0.05 | 0.2 | 0.5[d] | 1.0[d] | 2.0[d] |

[a]Corn syrup is evaporated to 85% solids, 15% moisture.
[b]Glycerin and syrup can be blended and co-evaporated.
[c]Lecithin and Salatrim can be pre-blended.
[d]Flavor and Salatrim can be pre-blended.

Examples 18 to 22 in Table 4 demonstrate the use of salatrim in medium-moisture sugar formulations having 2% to 5% moisture.

TABLE 4

|  | Ex. 18 | Ex. 19 | Ex. 20 | Ex. 21 | Ex. 22 |
|---|---|---|---|---|---|
| Sugar | 53.35 | 53.2 | 52.9 | 52.3 | 51.5 |
| Gum Base | 19.2 | 19.2 | 19.2 | 19.2 | 19.2 |
| Corn Syrup[a] | 15.0 | 15.0 | 15.0 | 15.0 | 15.0 |
| Dextrose Monohydrate | 10.0 | 10.0 | 10.0 | 10.0 | 10.0 |
| Glycerin[b] | 1.4 | 1.4 | 1.4 | 1.4 | 1.4 |
| Flavor | 0.9[d] | 0.9[d] | 0.9[d] | 0.9[d] | 0.9[d] |
| Lecithin[c] | 0.1 | 0.1 | 0.1 | 0.2 | - |
| Salatrim[c] | 0.05[d] | 0.2[d] | 0.5[d] | 1.0[d] | 2.0[d] |

[a]Corn syrup is evaporated to 85% solids, 15% moisture.
[b]Glycerin and syrup can be blended and co-evaporated.
[c]Salatrim and Lecithin can be pre-blended.
[d]Flavor and Salatrim can be pre-blended.

Examples 23-27 in Table 5 demonstrate the use of salatrim in high moisture sugar formulations having more than about 5% moisture.

TABLE 5

|  | Ex. 23 | Ex. 24 | Ex. 25 | Ex. 26 | Ex. 27 |
|---|---|---|---|---|---|
| Sugar | 50.95 | 50.7 | 50.4 | 48.9 | 48.0 |
| Gum Base | 24.0 | 24.0 | 24.0 | 24.0 | 24.0 |
| Corn Syrup | 24.0 | 24.0 | 24.0 | 24.6 | 24.6 |
| Glycerin | 0.0 | 0.0 | 0.0 | 0.4 | 0.4 |
| Flavor | 1.0 | 1.0 | 1.0 | 1.0 | 1.0 |
| Lecithin* | — | 0.1 | 0.1 | 0.1 | — |
| Salatrim | 0.05 | 0.2 | 0.5 | 1.0 | 2.0 |

*Lecithin and Salatrim can be pre-blended.

Examples 28-32 in Table 6 and Examples 33-37 in Tables 7 and 8 demonstrate the use of salatrim in low- and high-moisture gums that are sugar-free. Low-moisture gums have less than 2% moisture, and high-moisture gums have greater than 2% moisture.

TABLE 6

| | Ex. 28 | Ex. 29 | Ex. 30 | Ex. 31 | Ex. 32 |
|---|---|---|---|---|---|
| **Base** | **25.5** | **25.5** | **25.5** | **25.5** | **25.5** |
| Sorbitol | 50.85 | 50.7 | 50.5 | 50.0 | 48.0 |
| Mannitol | 12.0 | 12.0 | 12.0 | 12.0 | 13.0 |
| Glycerin | 10.0 | 10.0 | 10.0 | 10.0 | 10.0 |
| Flavor | 1.5 | 1.5 | 1.5 | 1.5 | 1.5 |
| Lecithin* | 0.1 | 0.1 | — | — | — |
| Salatrim | 0.05 | 0.2 | 0.5 | 1.0 | 2.0 |

*Lecithin and Salatrim can be pre-blended.

**Flavor and Salatrim can be pre-blended.

TABLE 7

| | Ex. 33 | Ex. 34 | Ex. 35 | Ex. 36 | Ex. 37 |
|---|---|---|---|---|---|
| Base | 25.5 | 25.5 | 25.5 | 25.5 | 25.5 |
| Sorbitol | 50.95 | 50.8 | 50.5 | 51.9 | 49.8 |
| Sorbitol Liquid* | 10.0 | 10.0 | 10.0 | 10.0 | 11.0 |
| Mannitol | 10.0 | 10.0 | 10.0 | 10.0 | 10.0 |
| Glycerin | 2.0 | 2.0 | 2.0 | 0.0 | 0.0 |
| Flavor | 1.5 | 1.5 | 1.5 | 1.5 | 1.5 |
| Lecithin** | — | — | — | 0.1 | 0.2 |
| Salatrim | 0.05 | 0.2 | 0.5 | 1.0 | 2.0 |

*Sorbitol liquid contains 70% sorbitol, 30% water.

**Lecithin and Salatrim can be pre-blended.

***Flavor and Salatrim can be pre-blended.

TABLE 8

| | Ex. 38 | Ex. 39 | Ex. 40 | Ex. 42 | Ex 42 |
|---|---|---|---|---|---|
| Base | 25.5 | 25.5 | 25.5 | 25.5 | 25.5 |
| Sorbitol | 50.95 | 50.7 | 50.4 | 52.0 | 51.0 |
| HSH Syrup* | 10.0 | 10.0 | 10.0 | 10.0 | 10.0 |
| Mannitol | 8.0 | 8.0 | 8.0 | 8.0 | 9.0 |
| Glycerin** | 4.0 | 4.0 | 4.0 | 2.0 | 1.0 |
| Flavor | 1.5 | 1.5 | 1.5 | 1.5 | 1.5 |
| Lecithin*** | — | 0.1 | 0.1 | — | — |
| Salatrim**** | 0.05 | 0.2 | 0.5 | 1.0 | 2.0 |

*Lycasin brand hydrogenated starch hydrolyzate syrup.

**Glycerin and HSH syrup may be blended or co-evaporated.

***Lecithin and Salatrim can be pre-blended.

****Flavor and Salatrim can be pre-blended.

Table 9 shows sugar chewing gum formulations that can be made with salatrim and various types of sugars.

## TABLE 9

|            | Ex. 43 | Ex. 44 | Ex. 45 | Ex. 46 | Ex. 47 | Ex. 48 |
|------------|--------|--------|--------|--------|--------|--------|
| Gum Base   | 19.2   | 19.2   | 19.2   | 19.2   | 19.2   | 19.2   |
| Sucrose    | 49.4   | 48.5   | 44.4   | 43.5   | 34.4   | 43.5   |
| Glycerin   | 1.4    | 1.4    | 1.4    | 1.4    | 1.4    | 1.4    |
| Corn Syrup | 14.0   | 14.0   | 14.0   | 14.0   | 14.0   | 14.0   |
| Dextrose   | 5.0    | 5.0    | —      | —      | 10.0   | 5.0    |

| | | | | | | |
|---|---|---|---|---|---|---|
| Lactose | 5.0 | 5.0 | 10.0 | 10.0 | — | — |
| Fructose | 5.0 | 5.0 | 10.0 | 10.0 | 10.0 | 5.0 |
| Invert Sugar | — | — | — | — | 10.0 | 10.0 |
| Maltose | — | — | — | — | — | — |
| Corn Syrup Solids | — | — | — | — | — | — |
| Peppermint Flavor | 0.9 | 0.9 | 0.9 | 0.9 | 0.9 | 0.9 |
| Salatrim | 0.1 | 1.0 | 0.1 | 1.0 | 0.1 | 1.0 |

| | Ex. 49 | Ex. 50 | Ex. 51 | Ex. 52 | Ex. 53 | Ex. 54 |
|---|---|---|---|---|---|---|
| Gum Base | 19.2 | 19.2 | 19.2 | 19.2 | 19.2 | 19.2 |
| Sucrose | 34.4 | 43.5 | 34.4 | 43.5 | 42.4 | 46.5 |
| Glycerin | 1.4 | 1.4 | 1.4 | 1.4 | 1.4 | 1.4 |
| Corn Syrup | 14.0 | 14.0 | 14.0 | 14.0 | 11.0 | 11.0 |
| Dextrose | 10.0 | 5.0 | 10.0 | 5.0 | 10.0 | 5.0 |
| Lactose | — | — | — | — | — | — |
| Fructose | 10.0 | 5.0 | 10.0 | 5.0 | 5.0 | 5.0 |
| Invert Sugar | 10.0 | 10.0 | — | — | 5.0 | 5.0 |
| Maltose | — | — | 10.0 | 10.0 | — | — |
| Corn Syrup Solids | — | — | — | — | 5.0 | 5.0 |
| Peppermint Flavor | 0.9 | 0.9 | 0.9 | 0.9 | 0.9 | 0.9 |
| Salatrim | 0.1 | 1.0 | 0.1 | 1.0 | 0.1 | 1.0 |

| | Ex. 55 | Ex. 56 |
|---|---|---|
| Gum Base | 19.2 | 19.2 |
| Sucrose | 42.4 | 36.5 |
| Glycerin | 6.4 | 6.4 |
| Corn Syrup | 11.0 | 11.0 |
| Dextrose | 5.0 | 5.0 |
| Lactose | | |
| Fructose | 5.0 | 5.0 |
| Invert Sugar | 5.0 | 5.0 |

| | | | |
|---|---|---|---|
| Maltose | — | — | |
| Corn Syrup Solids | 5.0* | 10.0* | |
| Peppermint Flavor | 0.9 | 0.9 | |
| Salatrim | 0.1 | 1.0 | |

*5-25DE maltodextrin can be used.

Table 10 shows chewing gum formulations that are free of sugar. These formulations can use a wide variety of other non-sugar alditols.

## TABLE 10

## (WEIGHT PERCENT)

| | Ex. 57 | Ex. 58 | Ex. 59 | Ex. 60 | Ex. 61 | Ex. 62 |
|---|---|---|---|---|---|---|
| Gum Base | 25.5 | 25.5 | 25.5 | 25.5 | 25.5 | 25.5 |
| Glycerin | 2.0 | 2.0 | 2.0 | 2.0 | 2.0 | 2.0 |
| Sorbitol | 43.9 | 43.0 | 43.9 | 38.0 | 37.9 | 39.0 |
| Mannitol | — | 10.0 | 10.0 | 10.0 | 10.0 | 6.0 |
| Sorbitol Liquid | 17.0 | 17.0 | — | — | — | — |
| Lycasin | — | — | 17.0 | 12.0 | 8.0 | 10.0 |
| Maltitol | 10.0 | — | — | 10.0 | — | — |
| Xylitol | — | — | — | — | 15.0 | 15.0 |
| Lactitol | — | — | — | — | — | — |
| Palatinit | — | — | — | — | — | — |
| Flavor | 1.5 | 1.5 | 1.5 | 1.5 | 1.5 | 1.5 |
| Salatrim | 0.1 | 1.0 | 0.1 | 1.0 | 0.1 | 1.0 |

## TABLE 10 (Cont'd)

## (WEIGHT PERCENT)

| | Ex. 63 | Ex. 64 | Ex. 65 | Ex. 66 | Ex. 67 | Ex. 68 |
|---|---|---|---|---|---|---|
| Gum Base | 25.5 | 25.5 | 25.5 | 25.5 | 25.5 | 25.5 |
| Glycerin | 8.0 | 8.0 | 8.0 | 2.0 | 1.0 | 0.0 |
| Sorbitol | 41.9 | 36.0 | 31.9 | 40.0 | 26.9 | 21.0 |
| Mannitol | 8.0 | 8.0 | 8.0 | — | — | — |

13

| Sorbitol | | | | | | |
|---|---|---|---|---|---|---|
| Liquid | 5.0 | — | — | — | — | — |
| Lycasin | — | 5.0 | 5.0 | 5.0 | 10.0 | 10.0 |
| Maltitol | — | 5.0 | — | — | — | — |
| Xylitol | — | — | — | 15.0 | 10.0 | 20.0 |
| Lactitol | 10.0 | 10.0 | 10.0 | — | — | — |
| Palatinit | — | — | 10.0 | 10.0 | 25.0 | 21.0 |
| Flavor | 1.5 | 1.5 | 1.5 | 1.5 | 1.5 | 1.5 |
| Salatrim | 0.1 | 1.0 | 0.1 | 1.0 | 0.1 | 1.0 |

The following examples of the invention are also shown in Table 17 for for chewing gum bases that are wax-free and have some reduced tack properties, Table 13 for wax free bubble gum bases, and Table 14 for wax-free gum bases having non-tack characteristics. These examples illustrate how salatrim can be added to a wide variety of chewing gum bases to partially replace some of the oils, fats, and base softeners.

## TABLE 11: WAX-FREE GUM BASES FOR USE IN CHEWING GUM HAVING SOME REDUCED TACK CHARACTERISTICS (EXAMPLES 69-73)

### EXAMPLES 69-73

| IDENTIFICATION - EXAMPLES #: GENERIC INGREDIENTS | 69 | 70 | 71 | 72 | 73 |
|---|---|---|---|---|---|
| ** SYNTHETIC ELASTOMER ** | | | | | |
| STYRENE-BUTADIENE ELASTOMER | 5.3 | — | 2.1 | 1.8 | — |
| BUTYL (ISOPRENE-ISOBUTYLENE) ELASTOMER | 8.6 | 7.9 | 7.2 | — | 8.1 |
| POLYISOBUTYLENE ELASTOMER | 7.1 | — | 7.4 | 24.8 | 3.6 |
| POLYVINYL ACETATE | 10.5 | 27.2 | 15.3 | 10.1 | 27.3 |
| ** ELASTOMER PLASTICIZERS ** | | | | | |
| GLYCEROL ESTERS OF ROSIN | 2.1 | — | 19.0 | 3.7 | — |
| GLYCEROL ESTERS OF PART HYD ROSIN | 4.3 | 18.2 | — | 7.9 | — |
| TERPENE RESINS | 10.8 | — | — | 7.1 | 26.8 |
| ** FILLER ** | | | | | |
| CALCIUM CARBONATE | — | 15.9 | 20.7 | 17.7 | 11.4 |
| TALC | 25.5 | — | — | — | — |
| ** SOFTENER ** | | | | | |
| HYDROGENATED COTTONSEED OIL | — | 6.0 | — | 7.0 | — |
| HYDROGENATED SOYBEAN OIL | 4.3 | — | 6.1 | — | — |
| PARTIALLY HYDROGENATED SOYBEAN AND PALM OIL | 3.3 | — | 6.0 | — | 9.1 |
| PARTIALLY HYDROGENATED COTTONSEED OIL | — | 5.3 | — | 7.0 | — |

| | | | | | |
|---|---|---|---|---|---|
| SALATRIM | 7.7 | 11.3 | 12.2 | 7.0 | 5.2 |
| GLYCEROL MONOSTEARATE | 8.2 | 7.4 | 4.0 | 3.5 | 4.8 |
| LECITHIN | 2.3 | 0.8 | – | 2.4 | 3.7 |
| TOTAL PERCENT | 100.0 | 100.0 | 100.0 | 100.0 | 100.0 |

## EXAMPLES 74-76

| IDENTIFICATION - EXAMPLES #: GENERIC INGREDIENTS | 74 | 75 | 76 |
|---|---|---|---|
| ** SYNTHETIC ELASTOMER ** | | | |
| STYRENE-BUTADIENE ELASTOMER | 5.2 | 2.1 | 5.9 |
| BUTYL (ISOPRENE-ISOBUTYLENE) ELASTOMER | 4.1 | 7.2 | 6.9 |
| POLYISOBUTYLENE ELASTOMER | 5.9 | 7.3 | 2.0 |
| POLYVINYL ACETATE | 25.7 | 15.3 | 24.6 |
| ** ELASTOMER PLASTICIZERS ** | | | |
| GLYCEROL ESTERS OF ROSIN | 23.5 | 19.1 | 8.6 |
| GLYCEROL ESTERS OF PART HYD ROSIN | — | — | 8.0 |
| TERPENE RESINS | 3.2 | — | 1.9 |
| ** FILLER ** | | | |
| CALCIUM CARBONATE | 15.1 | 20.7 | 9.9 |
| TALC | — | — | 7.2 |
| ** SOFTENER ** | | | |
| HYDROGENATED COTTONSEED OIL | — | — | 7.0 |
| HYDROGENATED SOYBEAN OIL | — | — | — |
| PARTIALLY HYDROGENATED SOYBEAN AND PALM OIL | 5.5 | 8.3 | 4.0 |
| PARTIALLY HYDROGENATED COTTONSEED OIL | 3.0 | 9.6 | — |
| SALATRIM | 3.7 | 6.4 | 10.1 |
| GLYCEROL MONOSTEARATE | 5.1 | 4.0 | 3.7 |
| LECITHIN | — | — | — |
| TOTAL PERCENT | 100.0 | 100.0 | 100.0 |

## EXAMPLES 77-80

| IDENTIFICATION - EXAMPLES #: GENERIC INGREDIENTS | 77 | 78 | 79 | 80 |
|---|---|---|---|---|
| ** SYNTHETIC ELASTOMER ** | | | | |
| STYRENE-BUTADIENE ELASTOMER | 3.9 | 2.1 | — | — |
| BUTYL (ISOPRENE-ISOBUTYLENE) ELASTOMER | 5.3 | 6.0 | 8.9 | 3.6 |
| POLYISOBUTYLENE ELASTOMER | 12.7 | 8.5 | 10.0 | 11.1 |
| POLYVINYL ACETATE | 14.9 | 15.3 | 21.3 | 21.9 |
| ** ELASTOMER PLASTICIZERS ** | | | | |
| GLYCEROL ESTERS OF ROSIN | — | 10.1 | — | 19.6 |
| GLYCEROL ESTERS OF PART HYD ROSIN | — | 8.9 | — | 11.2 |
| TERPENE RESINS | 21.4 | — | 9.7 | 3.7 |
| ** FILLER ** | | | | |
| CALCIUM CARBONATE | 13.7 | 20.9 | 21.5 | 6.4 |
| TALC | 1.4 | — | — | — |
| ** SOFTENER ** | | | | |
| HYDROGENATED COTTONSEED OIL | — | 4.2 | — | 5.0 |
| HYDROGENATED SOYBEAN OIL | 1.7 | — | 5.0 | — |
| PARTIALLY HYDROGENATED SOYBEAN AND PALM OIL | — | — | — | 10 |
| PARTIALLY HYDROGENATED COTTONSEED OIL | — | — | 15.0 | — |
| SALATRIM | 17.0 | 20.0 | 3.2 | 4.2 |
| GLYCEROL MONOSTEARATE | 5.7 | 4.0 | 5.4 | 3.3 |
| LECITHIN | 2.3 | — | — | — |
| TOTAL PERCENT | 100.0 | 100.0 | 100.0 | 100.0 |

## EXAMPLES 81-85

| IDENTIFICATION - EXAMPLES #: GENERIC INGREDIENTS | 81 | 82 85 | 83 | 84 |
|---|---|---|---|---|

| ** SYNTHETIC ELASTOMER ** | | | | | |
|---|---|---|---|---|---|
| STYRENE-BUTADIENE ELASTOMER | – | 3.2 | 4.1 | – | – |
| BUTYL (ISOPRENE-ISOBUTYLENE) ELASTOMER | 7.4 | 7.3 | 11.3 | 10.0 | 8.3 |
| POLYISOBUTYLENE ELASTOMER | 1.9 | 7.5 | 7.9 | 1.9 | 3.6 |
| POLYVINYL ACETATE | 24.8 | 21.1 | 18.2 | 27.6 | 27.5 |
| ** ELASTOMER PLASTICIZERS ** | | | | | |
| GLYCEROL ESTERS OF ROSIN | – | 15.3 | – | – | – |
| GLYCEROL ESTERS OF PART HYD ROSIN | – | 2.4 | 26.2 | – | – |
| TERPENE RESINS | 25.8 | 5.8 | 1.4 | 25.3 | 25.3 |
| ** FILLER ** | | | | | |
| CALCIUM CARBONATE | 18.6 | – | 13.6 | 11.3 | 11.3 |
| TALC | – | 14.8 | – | – | – |
| ** SOFTENER ** | | | | | |
| HYDROGENATED COTTONSEED OIL | 2.0 | 4.4 | 1.2 | – | – |
| HYDROGENATED SOYBEAN OIL | – | – | – | 2.4 | 4.0 |
| PARTIALLY HYDROGENATED SOYBEAN AND PALM OIL | – | 4.0 | – | – | 4.2 |
| PARTIALLY HYDROGENATED COTTONSEED OIL | – | – | – | – | – |
| SALATRIM | 10.3 | 11.4 | 7.0 | 13.0 | 8.3 |
| GLYCEROL MONOSTEARATE | 4.4 | 2.8 | 5.2 | 4.8 | 4.8 |
| LECITHIN | 4.8 | – | 3.9 | 3.7 | 2.7 |
| TOTAL PERCENT | 100.0 | 100.0 | 100.0 | 100.0 | 100.0 |

## EXAMPLES 86-89

| IDENTIFICATION - EXAMPLES #:<br>GENERIC INGREDIENTS | 86 | 87 | 88 | 89 |
|---|---|---|---|---|
| ** NATURAL ELASTOMER ** | | | | |
| NATURAL GUM | 22.0 | 25.1 | 22.8 | 17.6 |
| ** SYNTHETIC ELASTOMER ** | | | | |
| STYRENE-BUTADIENE ELASTOMER | – | 1.9 | 2.6 | – |
| BUTYL (ISOPRENE-ISOBUTYLENE) ELASTOMER | 4.8 | 2.1 | 4.1 | 10.2 |
| POLYISOBUTYLENE ELASTOMER | 5.7 | 4.7 | 3.2 | 2.1 |
| POLYVINYL ACETATE | 16.4 | 24.8 | 16.3 | 26.9 |
| ** ELASTOMER PLASTICIZERS ** | | | | |
| GLYCEROL ESTERS OF ROSIN | 3.8 | 3.2 | 6.9 | 11.3 |
| GLYCEROL ESTERS OF PART HYD ROSIN | 12.3 | 12.6 | 11.8 | 4.8 |
| METHYL ESTERS OF ROSIN | – | 2.1 | 1.7 | – |
| TERPENE RESINS | – | – | – | – |
| ** FILLER ** | | | | |
| CALCIUM CARBONATE | – | 4.4 | 9.3 | – |
| TALC | 7.1 | – | – | 4.6 |
| ** SOFTENER ** | | | | |
| HYDROGENATED COTTONSEED OIL | – | – | 10.0 | – |
| HYDROGENATED SOYBEAN OIL | 5.0 | – | – | 5.6 |
| PARTIALLY HYDROGENATED SOYBEAN AND PALM OIL | 6.0 | 9.0 | 3.7 | 5.0 |
| PARTIALLY HYDROGENATED COTTONSEED OIL | 5.0 | – | – | – |

| | | | | |
|---|---|---|---|---|
| SALATRIM | 5.8 | 3.6 | 4.5 | 5.6 |
| GLYCEROL MONOSTEARATE | 6.1 | 3.8 | -- | 6.3 |
| LECITHIN | -- | 2.7 | 3.1 | -- |
| TOTAL PERCENT | 100.0 | 100.0 | 100.0 | 100.0 |

## EXAMPLES 90-93

| IDENTIFICATION - EXAMPLES #:<br>GENERIC INGREDIENTS | 90 | 91 | 92 | 93 |
|---|---|---|---|---|
| ** NATURAL ELASTOMER ** | | | | |
| NATURAL GUM | 15.7 | 22.6 | 22.2 | 21.1 |
| ** SYNTHETIC ELASTOMER ** | | | | |
| STYRENE-BUTADIENE ELASTOMER | 1.9 | — | — | — |
| BUTYL (ISOPRENE-ISOBUTYLENE)<br>ELASTOMER | 3.7 | 5.8 | 5.7 | 6.1 |
| POLYISOBUTYLENE ELASTOMER | 4.1 | 3.1 | 3.1 | 2.8 |
| POLYVINYL ACETATE | 26.2 | 20.4 | 22.0 | 18.0 |
| ** ELASTOMER PLASTICIZERS ** | | | | |
| GLYCEROL ESTERS OF ROSIN | — | — | — | 15.7 |
| GLYCEROL ESTERS OF PART<br>HYD ROSIN | 15.3 | 11.7 | 15.2 | — |
| METHYL ESTERS OF ROSIN | — | 4.0 | — | — |
| TERPENE RESINS | — | — | — | — |
| ** FILLER ** | | | | |
| CALCIUM CARBONATE | 12.2 | 11.6 | 11.4 | — |
| TALC | — | — | — | 15.4 |
| ** SOFTENER ** | | | | |
| HYDROGENATED COTTONSEED OIL | — | 2.0 | — | 9.1 |
| HYDROGENATED SOYBEAN OIL | 3.0 | — | 6.2 | — |
| PARTIALLY HYDROGENATED SOYBEAN<br>AND PALM OIL | — | 15.0 | — | — |
| PARTIALLY HYDROGENATED<br>COTTONSEED OIL | 9.0 | — | 5.0 | — |
| SALATRIM | 3.1 | 1.5 | 4.9 | 6.0 |

| GLYCEROL MONOSTEARATE | 5.8 | 3.3 | 3.3 | 5.8 |
|---|---|---|---|---|
| LECITHIN | -- | -- | -- | -- |
| **TOTAL PERCENT** | 100.0 | 100.0 | 100.0 | 100.0 |

## EXAMPLES 94-98

| IDENTIFICATION - EXAMPLES #:<br>GENERIC INGREDIENTS | 94 | 95 | 96 | 97 | 98 |
|---|---|---|---|---|---|
| ** NATURAL ELASTOMER ** | | | | | |
| NATURAL GUM | 23.8 | 18.7 | 14.4 | 18.2 | 25.2 |
| ** SYNTHETIC ELASTOMER ** | | | | | |
| STYRENE-BUTADIENE ELASTOMER | — | — | — | — | ~ |
| BUTYL (ISOPRENE-ISOBUTYLENE) ELASTOMER | 3.1 | 6.0 | 9.1 | 6.8 | 2.4 |
| POLYISOBUTYLENE ELASTOMER | 7.7 | 5.5 | 3.6 | 5.4 | 4.9 |
| POLYVINYL ACETATE | 20.5 | 14.8 | 18.1 | 15.5 | 19.9 |
| ** ELASTOMER PLASTICIZERS ** | | | | | |
| GLYCEROL ESTERS OF ROSIN | — | — | 11.9 | — | 15.6 |
| GLYCEROL ESTERS OF PART HYD ROSIN | 10.4 | 15.5 | 13.0 | 12.7 | — |
| METHYL ESTERS OF ROSIN | 2.0 | — | — | 2.6 | — |
| TERPENE RESINS | 5.1 | — | — | — | 2.1 |
| ** FILLER ** | | | | | |
| CALCIUM CARBONATE | — | 18.8 | 14.1 | 15.7 | — |
| TALC | 5.3 | — | — | — | 7.1 |
| ** SOFTENER ** | | | | | |
| HYDROGENATED COTTONSEED OIL | — | 6.5 | 7.0 | — | — |
| HYDROGENATED SOYBEAN OIL | 7.9 | — | — | 5.0 | 10.0 |
| PARTIALLY HYDROGENATED SOYBEAN AND PALM OIL | — | — | 2.0 | — | — |
| PARTIALLY HYDROGENATED COTTONSEED OIL | — | — | — | 6.0 | — |
| SALATRIM | 7.9 | 6.5 | 6.8 | 5.0 | 8.4 |

| | | | | | |
|---|---|---|---|---|---|
| GLYCEROL MONOSTEARATE | 6.3 | 7.7 | – | 7.1 | 4.4 |
| LECITHIN | – | – | – | – | – |
| TOTAL PERCENT | 100.0 | 100.0 | 100.0 | 100.0 | 100.0 |

## TABLE 12: WAX-FREE GUM BASES FOR USE IN BUBBLE GUM (EXAMPLES 99-102)

### EXAMPLES 99-102

| IDENTIFICATION - EXAMPLES #: | 99 | 100 | 101 | 102 |
|---|---|---|---|---|
| **GENERIC INGREDIENTS** | | | | |
| ** SYNTHETIC ELASTOMER ** | | | | |
| POLYISOBUTYLENE ELASTOMER | 17.1 | 11.7 | 11.6 | 5.4 |
| POLYVINYL ACETATE | 24.9 | 29.4 | 31.5 | 34.8 |
| ** ELASTOMER PLASTICIZERS ** | | | | |
| GLYCEROL ESTERS OF ROSIN | 6.8 | 10.7 | 19.8 | 18.3 |
| GLYCEROL ESTERS OF PART HYD ROSIN | – | – | – | – |
| ** FILLER ** | | | | |
| CALCIUM CARBONATE | – | – | – | 30.2 |
| TALC | 34.7 | 34.1 | 21.9 | – |
| ** SOFTENER ** | | | | |
| SALATRIM | 1.1 | 3.4 | 3.0 | 2.0 |
| GLYCEROL TRIACETATE | 4.6 | 4.4 | 5.0 | 5.3 |
| GLYCEROL MONOSTEARATE | 5.8 | 4.3 | 4.9 | 3.9 |
| ACETYLATED MONOGLYCERIDE | 5.0 | 2.0 | 2.3 | 2.1 |
| .TOTAL PERCENT | 100.0 | 100.0 | 100.0 | 100.0 |

## EXAMPLES 103-107

| IDENTIFICATION - EXAMPLES #: | 103 | 104 / 107 | 105 | 106 | 107 |
|---|---|---|---|---|---|
| **GENERIC INGREDIENTS** | | | | | |
| ** SYNTHETIC ELASTOMER ** | | | | | |
| POLYISOBUTYLENE ELASTOMER | 7.9 | 13.0 | 7.9 | 11.8 | 11.8 |
| POLYVINYL ACETATE | 34.2 | 37.1 | 34.2 | 37.8 | 35.6 |
| ** ELASTOMER PLASTICIZERS ** | | | | | |
| GLYCEROL ESTERS OF ROSIN | 14.8 | — | — | — | — |
| GLYCEROL ESTERS OF PART HYD ROSIN | — | 19.8 | 14.8 | 19.8 | 19.8 |
| ** FILLER ** | | | | | |
| CALCIUM CARBONATE | 29.8 | 16.5 | 29.8 | — | — |
| TALC | — | — | — | 17.0 | 19.7 |
| ** SOFTENER ** | | | | | |
| SALATRIM | 1.0 | 3.5 | 3.0 | 2.6 | 0.8 |
| GLYCEROL TRIACETATE | 5.3 | 5.6 | 4.3 | 3.0 | 4.0 |
| GLYCEROL MONOSTEARATE | 4.0 | 4.5 | 3.0 | 3.2 | 2.3 |
| ACETYLATED MONOGLYCERIDE | 3.0 | — | 3.0 | 5.0 | 6.0 |
| TOTAL PERCENT | 100.0 | 100.0 | 100.0 | 100.0 | 100.0 |

## TABLE 13: WAX-FREE GUM BASES FOR USE IN CHEWING GUM HAVING NON-TACK CHARACTERISTICS (EXAMPLES 108-113)

### EXAMPLES 108-113

| IDENTIFICATION - EXAMPLES #: GENERIC INGREDIENTS | 108 | 109 | 110 | 111 | 112 | 113 |
|---|---|---|---|---|---|---|
| ** SYNTHETIC ELASTOMER ** | | | | | | |
| BUTYL (ISOPRENE-ISOBUTYLENE) ELASTOMER | — | — | — | 25.0 | 9.0 | 14.1 |
| POLYISOBUTYLENE | 35.0 | 17.0 | 20.0 | — | 16.9 | 12.1 |
| POLYVINYL ACETATE | — | 17.0 | 30.0 | 5.0 | 22.8 | 20.8 |
| ** FILLER ** | | | | | | |
| CALCIUM CARBONATE | 25.0 | 40.0 | 5.0 | 25.0 | — | 13.9 |
| TALC | — | — | — | — | 12.0 | — |
| ** SOFTENERS ** | | | | | | |
| HYDROGENATED SOYBEAN OIL | 5.0 | — | 15.0 | — | 14.8 | 7.7 |
| HYDROGENATED COTTONSEED OIL | — | 8.0 | — | 15.0 | 14.0 | 10.0 |
| PARTIALLY HYDROGENATED SOYBEAN AND PALM OIL | 20.0 | 2.0 | — | 15.0 | — | 7.0 |
| PARTIALLY HYDROGENATED COTTON-SEED OIL | — | — | 10.0 | — | — | 6.7 |

27

| | | | | | | |
|---|---|---|---|---|---|---|
| SALATRIM | 5.0 | 8.0 | 5.0 | 10.0 | 8.8 | 4.0 |
| GLYCEROL MONOSTEARATE | 10.0 | — | 5.0 | 5.0 | 1.7 | 3.7 |
| LECITHIN | — | 8.0 | — | — | — | — |

## EXAMPLES 114-119

| IDENTIFICATION - EXAMPLES #:<br>GENERIC INGREDIENTS | 114 | 115 | 116 | 117 | 118 | 119 |
|---|---|---|---|---|---|---|
| ** SYNTHETIC ELASTOMER ** | | | | | | |
| BUTYL (ISOPRENE-ISOBUTYLENE) ELASTOMER | 16.0 | 9.9 | 9.9 | 10.0 | 10.0 | 13.3 |
| POLYISOBUTYLENE | 10.0 | 15.5 | 15.5 | 15.9 | 15.9 | 21.2 |
| POLYVINYL ACETATE | 14.0 | 22.0 | 22.0 | 21.7 | 21.6 | 29.1 |
| ** FILLER ** | | | | | | |
| CALCIUM CARBONATE | 5.0 | 12.9 | 12.9 | 13.3 | — | 17.7 |
| TALC | 10.0 | — | — | — | 13.1 | — |
| ** SOFTENERS ** | | | | | | |
| HYDROGENATED SOYBEAN OIL | — | 14.0 | 9.0 | 3.3 | 13.5 | 6.1 |
| HYDROGENATED COTTONSEED OIL | — | 13.0 | 13.0 | 3.3 | 13.5 | 6.1 |
| PARTIALLY HYDROGENATED SOYBEAN AND PALM OIL | 3.0 | — | 10.0 | — | — | 2.0 |
| PARTIALLY HYDROGENATED COTTON-SEED OIL | — | — | — | 9.8 | — | — |
| SALATRIM | 35.0 | 10.0 | 5.0 | 20.0 | 9.8 | 3.2 |
| GLYCEROL MONOSTEARATE | 2.0 | 2.7 | 1.7 | 2.7 | 2.6 | 1.3 |
| LECITHIN | — | — | 1.0 | — | — | — |

It should be understood that various changes and modifications to the presently preferred embodiments described herein will be apparent to those skilled in the art. It is therefore intended that such changes and modifications be covered by the appended claims.

## Claims

1. A wax-free gum-base comprising:

    an elastomer; and
    at least 0.2% by weight structured triacylglycerols that include short and long chain acyl triglyceride molecules.

2. A gum base as claimed in claim 1 wherein the base is non-tacky.

3. A gum base as claimed in claim 1 or 2 wherein the base is a bubble gum-type base.

4. A gum base as claimed in any one of claims 1 to 3 including at least one resin.

5. A gum base as claimed in any one of claims 1 to 4 including at least one softener chosen from the group consisting of: tallow; hydrogenated tallow; hydrogenated and partially hydrogenated vegetable oils; cocoa butter; glycerol monostearate; glycerol triacetate; and lecithin.

6. A gum base as claimed in any one of claims 1 to 5 wherein the structured triacylglycerols that include short and long chain acyl triglyceride molecules constitute not more than 40% by weight of the base.

7. A gum base as claimed in any one of claims 1 to 6 wherein the structured triacylglycerols that include short and long chain triglyceride molecules are salatrim.

8. A gum base as claimed in any one of claims 1 to 7 further comprising polyvinyl acetate.

9. A chewing gum comprising:

    an insoluble wax-free gum base;
    a water soluble portion;
    a flavour; and
    at least 0.01% by weight structured triacylglycerols that include short and long chain acyl triglyceride molecules.

10. A chewing gum as claimed in claim 9 including at least one softener chosen from the group consisting of: tallow; hydrogenated tallow; hydrogenated and partially hydrogenated vegetable oils; cocoa butter; glycerol monostearate; glycerol triacetate; and lecithin.

11. A chewing gum as claimed in claim 9 or 10 wherein the structured triacylglycerols that include short and long chain acyl triglyceride molecules constitute not more than 10% by weight of the chewing gum formulation.

12. A chewing gum as claimed in any one of claims 9 to 11 wherein the gum further comprises one or more of emulsifier, elastomer plasticizer, lecithin and mint oil.

13. A chewing gum as claimed in any one of claims 9 to 12 wherein the structured triacylglycerols that include short and long chain acyl triglyceride molecules are salatrim.

14. A chewing gum as claimed in any one of claims 9 to 13 wherein the flavour is chosen from the group consisting of mint and fruit.

15. A chewing gum as claimed in any one of claims 9 to 14 wherein the insoluble gum base comprises polyvinyl acetate and an elastomer.

16. A method for creating a wax-free chewing gum comprising the step of substituting for a plasticizer, softener, or emulsifier in a chewing gum formulation structured triacylglycerols that include short and long chain acyl triglyceride molecules.

**17.** A method as claimed in claim 16 wherein the structured triacylglycerols that include short and long chain acyl triglyceride molecules constitute from 0.01% to 10% by weight of the chewing gum formulation.

**18.** The method of claim 16 or 17 wherein the structured triacylglycerols that include short and long chain triglyceride molecules are salatrim.

**19.** A method for reducing caloric content in a wax-free chewing gum formulation including fats/oils comprising the step of using structured triacylglycerols that include short and long chain acyl triglyceride molecules in the formulation.

**20.** The method of claim 19 wherein the structured triacylglycerols that include short and long chain acyl triglyceride molecules are salatrim.


**Patentansprüche**

**1.** Wachsfreie Kaugummibase, enthaltend:

ein Elastomer und

wenigstens 0,2 Gew.-% strukturierte Triacylglycerine, die kurzkettige und langkettige Acyltriglyceridmoleküle enthalten.

**2.** Kaugummibase wie in Anspruch 1 beansprucht, worin die Base nicht klebrig ist.

**3.** Kaugummibase wie in Anspruch 1 oder 2 beansprucht, worin die Base eine Base vom Blasen-Kaugummityp ist.

**4.** Kaugummibase wie in einem der Ansprüche 1 bis 3 beansprucht, die wenigstens ein Harz enthält.

**5.** Kaugummibase wie in einem der Ansprüche 1 bis 4 beansprucht, die wenigstens ein Erweichungsmittel enthält, ausgewählt aus der Gruppe bestehend aus Talg, hydriertem Talg, hydrierten und partiell hydrierten pflanzlichen Ölen, Kakaobutter, Glycerinmonostearat, Glycerintriacetat and Lecithin.

**6.** Kaugummibase wie in einem der Ansprüche 1 bis 5 beansprucht, worin die strukturierten Triacylglycerine, die kurzkettige und langkettige Acyltriglyceridmoleküle enthalten, nicht meter als 40 Gew.% der Base ausmachen.

**7.** Kaugummibase wie in einem der Ansprüche 1 bis 6 beansprucht, worin die strukturierten Triacylglycerine, die kurzkettige und langkettige Triglyceridmoleküle enthalten, Salatrim sind.

**8.** Kaugummibase wie in einem der Ansprüche 1 bis 7 beansprucht, die weiterhin Polyvinylacetat enthält.

**9.** Kaugummi, enthaltend:

eine unlösliche, wachsfreie Kaugummibase,

einen wasserlöslichen Teil,

einen Aromastoff und

wenigstens 0,01 Gew.-% strukturierte Triacylglycerine, die kurzkettige und langkettige Acyltriglyceridmoleküle enthalten.

**10.** Kaugummi wie in Anspruch 9 beansprucht, enthaltend wenigstens ein Erweichungsmittel, ausgewählt aus der Gruppe bestehend aus Talg, hydriertem Talg, hydrierten und partiell hydrierten pflanzlichen Ölen, Kakaobutter, Glycerinmonostearat, Glycerintriacetat und Lecithin.

11. Kaugummi wie in Anspruch 9 oder 10 beansprucht, worin die strukturierten Triacylglycerine, die kurzkettige und langkettige Acyltriglyceridmoleküle enthalten, nicht mehr als 10 Gew.-% der Kaugummiformulierung ausmachen.

12. Kaugummi wie in einem der Ansprüche 9 bis 11 beansprucht, worin der Kaugummi weiter ein oder mehrere Emulgiermittel, elastomere Plastifiziermittel, Lecithin und Minzöl enthält.

13. Kaugummi wie in einem der Ansprüche 9 bis 12 beansprucht, worin die strukturierten Triacylglycerine, die kurzkettige und langkettige Acyltriglyceridmoleküle enthalten, Salatrim sind.

14. Kaugummi wie in einem der Ansprüche 9 bis 13 beansprucht, worin der Aromastoff ausgewählt ist aus der Gruppe bestehend aus Minze und Frucht.

15. Kaugummi wie in einem der Ansprüche 9 bis 14 beansprucht, worin die unlösliche Kaugummibase Polyvinylacetat und ein Elastomer enthält.

16. Verfahren zur Herstellung eines wachsfreien Kaugummis, umfassend den Schritt des Ersatzes eines Plastifiziermittels, Erweichungsmittels oder Emulgiermittels in einer Kaugummiformulierung durch strukturierte Triacylglycerine, die kurzkettige und langkettige Acyltriglyceridmoleküle enthalten.

17. Verfahren wie in Anspruch 16 beansprucht, worin die strukturierten Triacylglycerine, die kurzkettige und langkettige Acyltriglyceridmoleküle enthalten, 0,01 Gew.% bis 10 Gew.-% der Kaugummiformulierung ausmachen.

18. Verfahren nach Anspruch 16 oder 17, worin die strukturierten Triacylglycerine, die kurzkettige und langkettige Triglyceridmoleküle enthalten, Salatrim sind.

19. Verfahren zur Verringerung des Katoriengehalts einer wachsfreien, Fette/Öle enthaltenden Kaugummiformulierung, umfassend den Schritt der Verwendung von strukturierten Triacylglycerinen, die kurzkettige und langkettige Acyltriglyceridmoleküle in der Formulierung enthalten.

20. Verfahren nach Anspruch 19, worin die strukturierten Triacylglycerine, die kurzkettige und langkettige Acyltriglyceridmoleküle enthalten, Salatrim sind.

**Revendications**

1. Base de gomme sans cire comprenant :

   un élastomère ; et
   au moins 0,2 % en poids de triacylglycérols structurés qui comprennent des molécules de triglycérides acylés à chaîne courte et à chaîne longue.

2. Base de gomme selon la revendication 1, ladite base étant non collante.

3. Base de gomme selon la revendication 1 ou 2, ladite base étant une base de type pour gomme à faire des bulles ("bubble gum").

4. Base de gomme selon l'une quelconque des revendications 1 à 3, comprenant au moins une résine.

5. Base de gomme selon l'une quelconque des revendications 1 à 4, comprenant au moins un émollient choisi dans l'ensemble constitué de : suif ; suif hydrogéné ; huiles végétales hydrogénées et huiles végétales partiellement hydrogénées ; beurre de cacao ; monostéarate de glycérol ; triacétate de glycérol ; et lécithine.

6. Base de gomme selon l'une quelconque des revendications 1 à 5, dans laquelle les triacylglycérols structurée qui comprennent des molécules de triglycérides acylés à chaîne courte et à chaîne longue ne constituent pas plus de 40 % en poids de la base.

7. Base de gomme selon l'une quelconque des revendications 1 à 6, dans laquelle les triacylglycérols structurés qui comprennent des molécules de triglycérides à chaîne courte et à chaîne longue sont du salatrim.

8. Base de gomme selon l'une quelconque des revendications 1 à 7, comprenant, en outre, de l'acétate de polyvinyle.

9. Gomme à mâcher comprenant :

    une base de gomme insoluble sans cire ;
    une partie soluble dans l'eau ;
    un arôme ; et
    au moins 0,01 % en poids de triacylglycérols structurés qui comprennent des molécules de triglycérides acylés à chaîne courte et à chaîne longue.

10. Gomme à mâcher selon la revendication 9, comprenant au moins un émollient choisi dans l'ensemble constitué de : suif ; suif hydrogéné ; huiles végétales hydrogénées et huiles végétales partiellement hydrogénées ; beurre de cacao ; monostéarate de glycérol ; triacétate de glycérol ; et lécithine.

11. Gomme à mâcher selon la revendication 9 ou 10, dans laquelle les triacylglycérols structurés qui comprennent des molécules de triglycérides acylés à chaîne courte et à chaîne longue ne constituent pas plus de 10 % en poids de la formulation de la gomme à mâcher.

12. Gomme à mâcher selon l'une quelconque des revendications 9 à 11, ladite gomme comprenant, en outre, un ou plusieurs de : émulsifiant, plastifiant pour élastomère, lécithine et essence de menthe.

13. Gomme à mâcher selon l'une quelconque des revendications 9 à 12, dans laquelle les triacylglycérols structurés qui comprennent des molécules de triglycérides acylés à chaîne courte et à chaîne longue sont du salatrim.

14. Gomme à mâcher selon l'une quelconque des revendications 9 à 13, dans laquelle on choisit l'arôme dans l'ensemble constitué de menthe et de fruits.

15. Gomme à mâcher selon l'une quelconque des revendications 9 à 14, dans laquelle la base de gomme insoluble comprend de l'acétate de polyvinyle et un élastomère.

16. Procédé de fabrication d'une gomme à mâcher sans cire, comprenant l'êtape consistant à remplacer un plastifiant, un émollient ou un émulsifiant dans une formulation de gomme à mâcher par des triacylglycérols structurés qui comprennent des molécules de triglycérides acylés à chaîne courte et à chaîne longue.

17. Procédé selon la revendication 16, dans lequel les triacylglycérols structurés qui comprennent des molécules de triglycérides acylés à chaîne courts et à chaîne longue constituent de 0,01 % à 10 % en poids de la formulation de la gomme à mâcher.

18. Procédé selon la revendication 16 ou 17, dans lequel les triacylglycérols structurés qui comprennent des molécules de triglycérides acylés à chaîne courte et à chaîne longue sont au salatrim.

19. Procédé pour réduire la teneur en calories dans une formulation de gomme à mâcher sans cire comprenant des graisses/huiles, comprenant l'étape consistant à utiliser des triacylglycérols structurés qui comprennent des molécules de triglycérides acylés à chaîne courte et à chaîne longue dans la formulation.

20. Procédé selon la revendication 19, dans lequel les triacylglycérols structurés qui comprennent des molécules de triglycérides acylés à chaîne courte et à chaîne longue sont du salatrim.